# EUROPEAN PATENT APPLICATION

(11) **EP 0 903 679 A2**
(43) Date of publication of application: **24.03.1999**
(21) Application number: 98300953.1
(22) Date of filing: 10.02.1998
(51) Int. Cl.: G06F 17/60

(54) **Personal management system**

(30) Priority: 17.07.1997 JP 192863/97
(71) Applicant: FUJITSU LIMITED, Kawasaki-shi, Kanagawa 211-8588 (JP)
(72) Inventor: Kawamura, Noamichi, Kawasaki-shi, Kanagawa 211-8588 (JP); Moriya, Kazumasa, Kawasaki-shi, Kanagawa 211-8588 (JP); Fukunaga, Kazuo, Kawasaki-shi, Kanagawa 211-8588 (JP); Hotta, Fumiaki, Kawasaki-shi, Kanagawa 211-8588 (JP); Ikeda, Sekio, Kawasaki-shi, Kanagawa 211-8588 (JP); Oka, Nobuo, Kawasaki-shi, Kanagawa 211-8588 (JP); Esaki, Akira, Kawasaki-shi, Kanagawa 211-8588 (JP); Koyama, Keiko, Kawasaki-shi, Kanagawa 211-8588 (JP); Sugihara, Satsuki, Atsugi-shi, Kanagawa, 243-0005 (JP)
(74) Representative: Hitching, Peter Matthew

(57) **Abstract**

A personal management system includes an input unit (1), corresponding to an operator, for inputting place information regarding a place in which the operator is present, a management unit (2) for making a plurality of kinds of output information based on the place information input by the input unit and information which has been previously stored, and an output unit (3) for performing a predetermined operation in accordance with the kinds of output information made by the management unit (2).

## Description

### BACKGROUND OF THE INVENTION

### (1) Field of the Invention

The present invention generally relates to a personal management system, and more particularly to a personal management system which synthetically manages a plurality of personal information items, such as personal presence information, personal attending/leaving office information, personal schedule information, personal conference attending information, call-in and forwarding information, discrimination information regarding phone relay, information regarding building management based on personal information.

### (2) Description of the Related Art

Various types of information processing device (e.g., personal computers) have been introduced to offices. In many offices, one or a plurality of personal computers are provided for each employee. In recent years, portable personal computers have been proposed, and portable personal computers are often used by users leaving from their own desks. Further, various types of personal computers are connected to a LAN and information communication can be carried out everywhere.

The personal computers are convenient for persons, so called operators, who work using the personal computers. However, the management of personal action, such as the management of attending/leaving an office and the management of presence/absence at a desk, is carried out by a personal management system different from each of the personal computers used by the operators. Although there may be a case where the personal action (the personal information) is managed by using the personal computers, the personal computers are limitedly used for the management of the personal information. Thus, the fine management of the personal information in not performed sufficiently in accordance with office environment.

For example, as to the management of attending/leaving an office for employees, it is managed, using ID cards having magnetic stripes, whether employees have attended or left offices. The attending/leaving office data is collected via a network and processed by a predetermined processing system.

Thus, information representing whether each employee has attended or left the office can be obtained in realtime.

The attending/leaving office management system can manage attendance of employees for the present. However, personal moving information (presence/absence at a desk, meeting and going out) needed for work can not be obtained by using the attending/leaving office management system. That is, before calling an employee, information indicating whether the employee is presence or absence at his (her) own desk, whether the employee has a meeting somewhere, whether the employee at the meeting can be directly called and when the employee returns to his (her) own desk can not be supplied from the attending/leaving office management system.

Such personal destination information is obtained by means of another resource, such as a presence/absence table (a white board), to compensate the personal information. Another employee, such as a clerk, may be troubled to compensate the personal information. In an office in which desks are not assigned to employees, the labor and a time are further spent to manage places, in which the employees should work, using the presence/absence table.

In the meantime, there is an office in which groupware (e.g., trade name: TEAM MAIL) which is an application system for the personal computer is introduced so that destinations and schedules of respective employees can be seized. In this case, an operator operates a keyboard of the personal computer to supply destination information to a server via a LAN. Each of the employees can obtain destination information and schedule information of another employee by accessing files in the server.

However, the above system for seizing the destination and schedules of the respective employees are separated from the attending/leaving office management system, so that the above system can not manage the attendance of the employees.

In addition, if the operator does not operate the keyboard to input the destination information and the schedule information to the system, these information items are not input to the server. The operator is troubled with input operations on the keyboard, so that the operator may forget to input the destination information and the schedule information. Thus, it is not preferable that the system is applied to the management of the attendance.

Further, a call forwarding service which is one of telephone communication services is provided for users. By the call forwarding service, if a user is absent at his (her) own desk, a call received by a telephone on the desk is forwarded to a telephone set as a telephone to which a call is to be forwarded. This service is used in many offices. However, this service is supported by a single function system different from the personal destination management system and the attending/leaving office management system. Thus, information identifying the telephone to which a call is to be forwarded must be input to the system apart from the personal destination information and the attending/leaving office information.

In addition, a room lighting on/off management system, an air condition management system or an elevator management system is formed as one of building management systems. In the respective management systems, most of control processes are performed in accordance with a time, a day or a season. The control processes are not performed in connection with the personal information items. Thus, there is a case where electric lamps and air conditioners are being activated in a room in which no employee exists. There is a case where many elevators are activated even if a number of users is small. In these case, the energy is wasted.

As has been described above, conventionally, the attending/leaving office management system, the personal destination management system, the call-in and forwarding system, the building management system and the like are separately provided as the personal action management system. However, there is no system which synthetically manages personal actions. Thus, each user must input necessary information items to each of the systems, and the control processes must be performed based on time information or season information which does not depend on the personal action.

Moreover, most of information items which should be input to the respective management systems differ from each other, and types of units forming the management systems, particularly, input units (a card reader, a personal computer, a telephone and the like) differ from each other. Thus, input operations are troubled for an operator, so that the operator may forget to input necessary information items and input errors may occur.

In addition, in a case where places on which the input units are installed are fixed or semi-fixed and output functions depend on place information, the output functions are limited.

Further, although input information is statically used for the attending/leaving office management and the management of presence/absence at a desk, the input information is not dynamically used for operation controls of electric lamps and air conditioners.

### SUMMARY OF THE INVENTION

Accordingly, a general object of the present invention is to provide a novel and useful personal management system in which the disadvantages of the aforementioned prior art are eliminated.

A first specific object of the present invention is to provide a personal management system which synthetically and timely manages personal action information items, particularly to provide a personal management system in which management of personal information, such as management of presence/absence at a desk, attending/leaving office management and management of attendees in meetings, personal services, such as a call forwarding service and message management service and building management, such as electric lamps/air conditioner control management and elevator control management based on the personal action information can be synthetically performed.

The above first specific object is achieved by a personal management system management system comprising: an input unit, corresponding to an operator, for inputting place information regarding a place in which the operator is present; management means for making a plurality of kinds of output information based on the place information input by the input unit and information which has been previously stored; and an output unit for performing a predetermined operation in accordance with the kinds of output information made by the management means.

According to the present invention, due to the input unit, such as a personal computer, corresponding to an operator or shared by operators, various types of service can be provided by simple input operations.

A second object of the present invention is to provide a personal management system in which input operations can be unified.

The above second object is achieved by the above described personal management system wherein the management means has means for outputting a plurality of kinds of output information based on a single kind of information supplied from the input unit.

A third object of the present invention is to provide a personal management system in which error input operations and forgetting to input necessary information can be prevented.

The above third object is achieved by the above described personal management system wherein input unit includes means for automatically input information regarding the operator without input operations by the operator.

According to the present invention, since information regarding operators can be automatically input from the input unit, error input operations and forgetting to input necessary information can be reduced.

### BRIEF DESCRIPTION OF THE DRAWINGS

Other objects, features and advantages of the present invention will be apparent from the following description when read in conjunction with the accompanying drawings, in which:
Fig. 1 is a block diagram illustrating a principle of a personal management system according to an embodiment of the present invention;
Fig. 2 is a diagram illustrating an example of a output result;
Fig. 3 is a block diagram illustrating a structure of the personal management system according to the embodiment of the present invention;
Fig. 4 is a diagram illustrating an example of a personal information table;
Fig. 5 is a diagram illustrating an example of a place information table;
Fig. 6 is a diagram illustrating an example of a time information table;
Fig. 7 is a flowchart illustrating a procedure of a process for forming an operation screen;
Fig. 8 is a diagram illustrating an example of personal notice board screen;
Fig. 9 is a flowchart illustrating a procedure of an operation of the personal management system;
Fig. 10 is a diagram illustrating an example of a screen indicating information regarding presence/absence in a section;
Fig. 11 is a flowchart illustrating a procedure of a message operation control;
Fig. 12 is a diagram illustrating an example of a screen indicating information regarding presence/absence at desks;
Fig. 13 is a diagram illustrating an example of an input screen for control information;
Fig. 14 is a diagram illustrating an example of a database used for building management;
Fig. 15 is a diagram illustrating an example of a database indicating operation states of elevators;
Fig. 16 is a flowchart illustrating a procedure of an operation of an open-door interruption; and
Fig. 17 is a flowchart illustrating a procedure of an operation of 10-minute-timer interruption.

### DESCRIPTION OF THE PREFERRED EMBODIMENTS

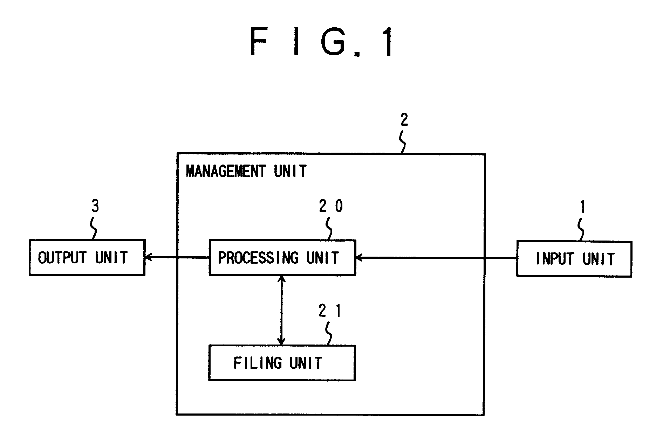

A description will be given, with reference to Fig. 1, of the principle of a personal management system according to an embodiment of the present invention.

As shown in Fig. 1, a personal management system has an input unit 1, a management unit 2 and an output unit 3. The management unit 2 is provided with a processing unit 20 and a filing unit 21.

As the input unit 1, a keyboard of a personal computer, a screen input device such as a mouse, a voice input unit, various sensors, various types of readers (e.g., a ID card reader and a IC card reader) and telephones are used.

The sensors include a sensor detects that an operator has seated when a power supply of a personal computer is turned on.

For example, an ID card reader is installed in an entrance of a conference room. When an employee card is set in the ID card reader, information is read out from the employee card. In this case, since information is automatically input without operations, it is preferable that the employee card is a radio card.

Information items may be assigned to buttons displayed on a screen of the personal computer. As a result, input operations for complex information items can be simplified.

The input unit 1 may be constituted by combination of devices which is preferable to input place information (inside of a factory, inside of a building, a conference room, a desk and the like) and opportunity information (attending an office, leaving an office, going out, absence at a desk).

When the input unit 1 is operated, the following process is performed. Information (a name, an employee code, a place, a time, attribute information) obtained by the input unit 1 is transmitted to the management unit 2.

Kinds of information items obtained by the input unit 1 differ from each other based on types of devices used as the input unit 1. Thus, devices pertinent to the system are used as the input unit 1 so that only necessary information for the system is transmitted to the management unit 2.

The management unit 2 cases to temporarily store input information transmitted from the input unit 1 in a personal information table and a place information table in the filing unit 21.

By the management unit 2, every time input information is transmitted from the input unit 1, that is, every time the information is changed, the contents of the filing unit 21 is updated. Thus, the tables are managed so that up-to-dated information is always maintained in the tables.

Such information may be formed in a database so as to be capable of being retrieved at a high speed. In addition, it is effective in later use to log information in a time series.

It may be decided, based on an expected performance and an amount of information to be managed, whether the personal information table and the place information table are physically integrated into a single table or separated.

In addition, although Fig. 1 shows that the management unit 2 and the input unit 1/output unit 3 are physically separated, these units are not necessarily needed to be physically separated. For example, in a case of the input unit 1 and the output unit 3 are included in a personal computer, a part of a processing unit and a storage unit of the personal computer may corresponds to the management unit 2.

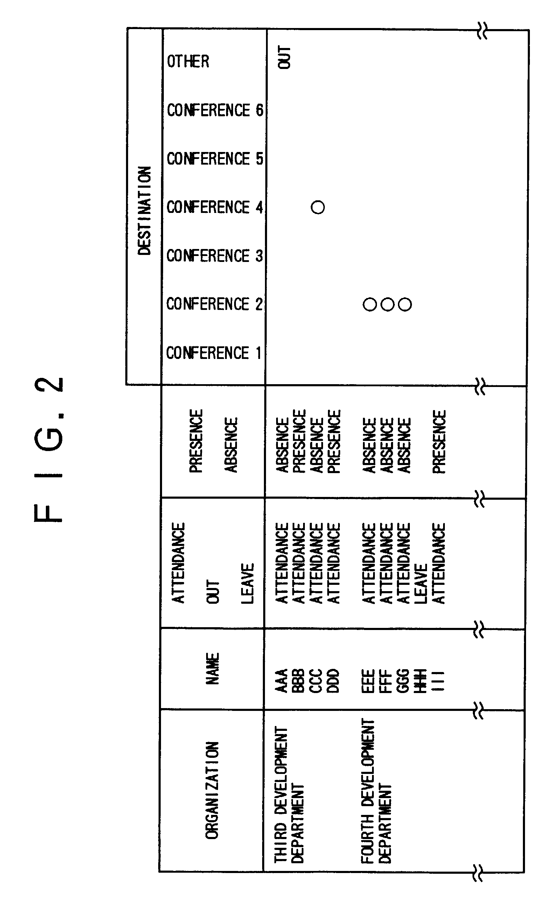

Fig. 2 shows an example of an output of the output unit 3.

A display screen of a personal computer, an electronic display hung on a wall, an voice output device, and a telephone may be used as the output unit 3. In a office in which one personal computer is provided for an employee, it is preferable that the display screen of the personal computer is used as the output unit 3. The employees may share a single electronic display board hung on the wall.

Hardware devices are suitably combined in accordance with need so that the output unit 3 is formed.

As a method for outputting information representing presence/absence at a desk, there is a method for dynamically outputting the information every time a state is changed (an employee moves from a desk) and a method for statistically outputting the information when a request (command) is provided.

In a case where information should be always displayed (the wall-hung electronic display board is generally preferable), the dynamic display method is effective. When necessity of displaying the information occurs (the display screen of the personal computer is generally preferable), the statistic display method is effective.

Although each of the methods can be adopted, a description will now be given of the case of the statistic display method.

When it is necessary for a user to know a group of employees or organizations, or whether employees are present or absent at places (conference rooms), retrieval commands or display commands are input to the system from the input unit 1 so that a display request is provided to the system. The management unit 2 then retrieves the personal information table and the place information table, and results are displayed on a screen. A name, an employee code, a group name, an organization name, a floor number of a building, a phone number and the like can be used as a unit of a retrieving request.

Although the display command can be easily input by a menu and buttons on a display screen of a personal computer, a physical switch devices or voice devices may be used to input the display command.

Fig. 2 shows an example of an output obtained when a retrieving request for retrieving presence/absence information of employees of a third development department and a fourth development department is provided. The output shown in Fig. 2 indicates that an employee "AAA" of a third development department is out, employees "BBB" and "DDD" are present at their own desks, an employee "CCC" has a meeting at a fourth conference room, employees "EEE", "FFF" and "GGG" of a fourth development department have a meeting at a second conference room, an employee "HHH" is absent and an employee "III" is present at his own desk. If the whole output is not displayed on the screen at once, the remaining part of the output can be displayed by scrolling of the screen.

In a scrolling operation, it is preferable that only the place information and attribute information are scrolled but columns of the organization name and employee name are not scrolled.

In a case where the above system is connected to the attending/leaving office management system, since destinations to which employees go out are displayed and a large amount of information is displayed, the system is more convenient.

In Fig. 2, a place at which each employee is present is indicated by using "PRESENCE", "ABSENCE", "○" and "OUT". Time information representing a time at which the presence of an employee is confirmed may be additionally indicated in the output. In this case, it can be known that the employee was present at least at the time represented by the time information.

A description will now be given of an embodiment of the present invention.

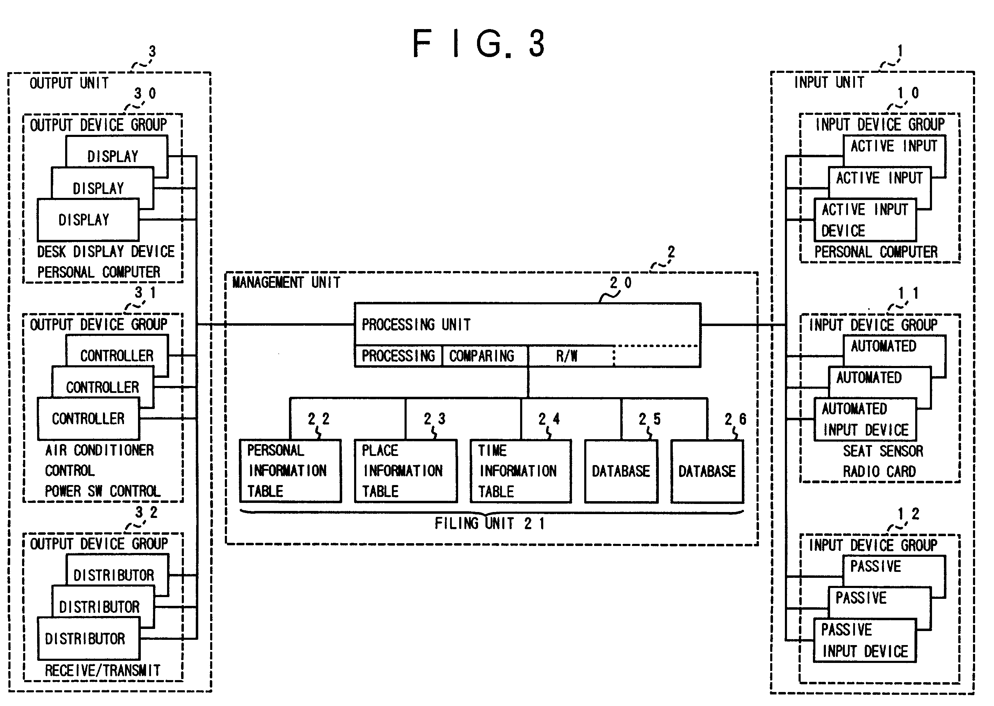

Fig. 3 shows a constitution of a system according to an embodiment of the present invention. Referring to Fig. 3, the input unit 1 is provided with input device groups 10 - 12 each of which includes a plurality of input devices.

The input device group 10 is referred to as an active input device group by which predetermined information is input to the management unit 2 by input operations by operators using input devices, such as keyboards of personal computers and ID cards.

The input device group 11 is referred to as an automated input device group by which predetermined information is input to the management unit 2 without input operations. For example, information may be supplied from seat sensors, automatically read from radio cards and automatically supplied when a power supply is turned on.

The input device group 12 is referred to as a passive input device group by which predetermined information is input to the management unit 2 in response to routine polling operations of the management unit 2.

The output unit 3 is provided with output device groups 30 - 32 each of which includes a plurality of output devices.

The output device group 30, including, for example, seat display devices and display devices of personal computers, is a group having display functions. The output device group 30 displays predetermined information, such as presence information and attending/leaving information, supplied from the management unit 2.

The output device group 31 is a group having control functions. The output device group 31 controls air conditioners and turns on and off electric lamps in rooms, in accordance with instructions from the management unit 2.

The output device group 32 is a group having distributing functions. The output device group 32 forwards a call to a predetermined telephone and connects to a service device such as voice mail equipment, based on information from the management unit 2.

The management unit 2 records personal information, place information and time information input as information regarding operators from the input unit 1. The management unit 2 has the filing unit 21 and the processing unit 20. The filing unit 21 stores attribute information of operators and history information. The processing unit 20 processes and compares information items in the filing unit 21 and communicates with the input unit 1, the output unit 2 and the filing unit 21.

The filing unit 21 is provided with a personal information table 22, a place information table 23, a time information table 24 and databases 25 and 26. It is decided, based on expected performance and an amount of information to be managed, whether these tables should be physically integrated into a single file or provided in a plurality of files.

The management unit 1, the input unit 1 and the output unit 3 may be coupled to each other by a LAN and other means.

In Fig. 3, the input device group 10 and the output device group 30 are separated for the sake of simplifying description. However, multi-function devices such as personal computers may be used as the input device group 10 and the output device group 30. A device group may be used as a plurality of device groups.

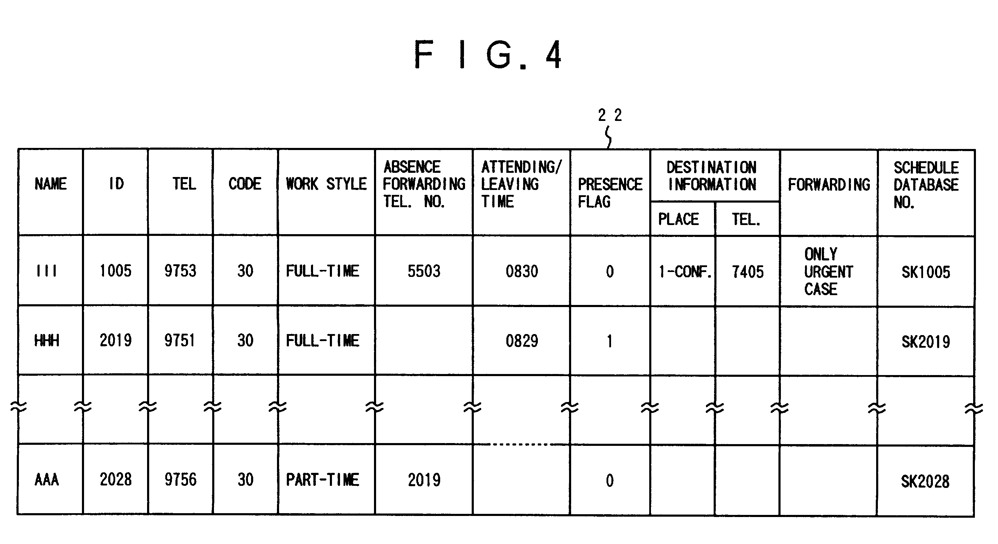

Fig. 4 shows an example of the personal information table 22 in which attributes of the employees are recorded.

Referring to Fig. 4, "PRESENCE FLAG" and "ATTENDING/LEAVING TIME" are information updated in realtime.

"DESTINATION INFORMATION" AND "ABSENCE FORWARDING TELEPHONE NUMBER" can be set in either a state in which they are updated in real time or a state in which they are updated under specific conditions (e.g., updated at a time specified in a schedule).

"SCHEDULE DATABASE NUMBER" represents a number identifying a database in which a schedule for each employee is recorded. If a doing schedule is recorded in the database, the schedule management can be performed based on the information recorded in the database.

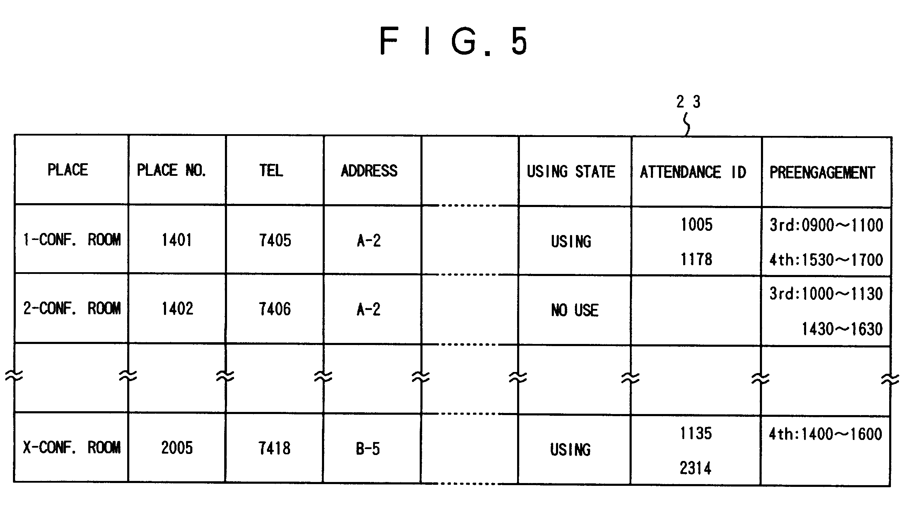

Fig. 5 shows an example of the place information table 23 in which information regarding places and rooms are recorded.

Referring to Fig. 5, "EXISTING USING STATE" and "ATTENDANCE ID" are information updated in realtime. The "ATTENDANCE ID" identifies an employee who attends a meeting. The user can know attendants of a meeting based on the "ATTENDANCE ID".

Thus, in a case the information of the place information table 23 is used, it is not necessary to confirm who actually attends a meeting in a conference room. A report of the meeting can be simply made. It can be check whether doubtful persons enter the conference room.

Further, in a case where a call is received by a telephone on the desk of an attendance or by a telephone in the conference room, receiving and/or forwarding the call can be limited with reference to the information of the "ATTENDANCE ID".

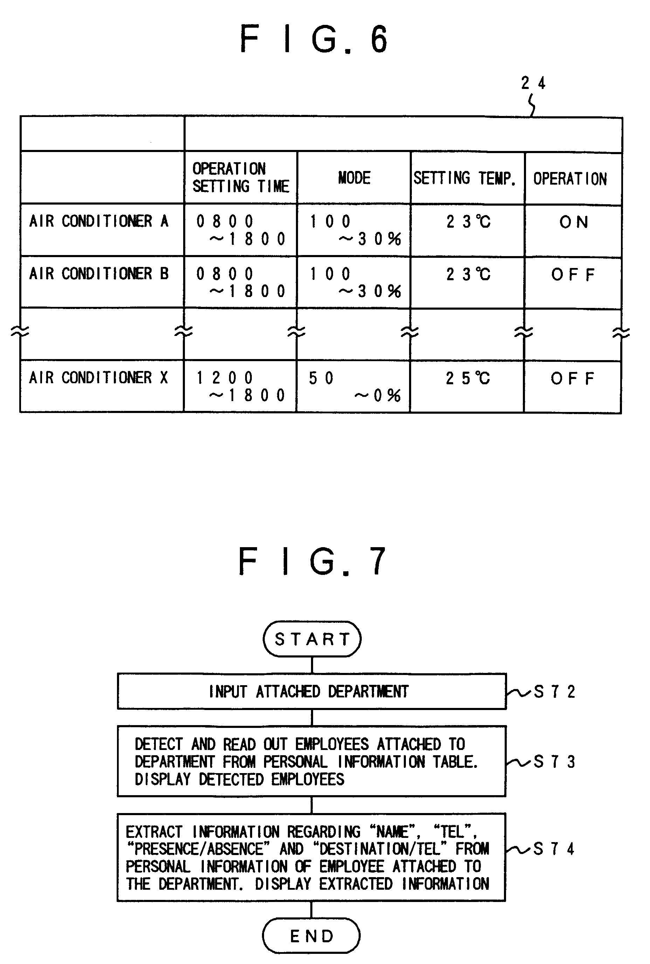

Fig. 6 shows the time information table 24 in which information regarding a time schedule is recorded.

Fig. 7 is a flowchart of a process for making an operation screen in a case where the input unit 1 and the output unit 3 are formed in a single personal computer.

In the filing unit 21 of the management unit 2, the personal information, the place information and the time information, as shown in Figs. 4, 5 and 6, are recorded. When an operator inputs needed information using the input unit 1, the information is supplied to the processing unit 20 of the management unit 2.

In the processing unit 20, the filing unit 21 is accessed, information items recorded in the tables 22 - 26 are processed and compared and input information is recorded, in accordance with the received input information. In the process shown in Fig. 7, the processing unit 20 reads out presence/absence information from the personal information table 23 and the information read out from the table 23 is transmitted to the output unit 3. The information is then displayed on a screen of the output unit 3.

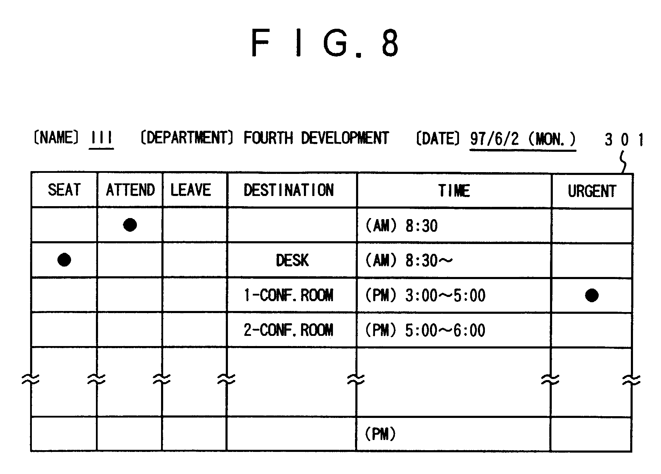

A detailed description will now be given, with reference to Figs. 8 through 17, of respective services.

When an ID number is input to the personal computer 10 (the input device group 10) which functions as the input unit 1, a personal bulletin board 301, as shown in Fig. 8, is displayed on a screen of the personal computer 30 (the output device group 30) which functions as the output unit 3. The functions of the personal computers 10 and 30 are actually provided in a single personal computer. For the sake of convenience, the single personal computer used as the input unit 1 is represented by the personal computer 10, and the single personal computer used as the output unit 3 is represented by the personal computer 30.

The personal bulletin board 301 is set in the management unit 2. The management unit 2 is accessed by an operator of the system and other operators so that the personal bulletin board 301 can be displayed on the screen of each of the personal computers which function as the output unit 3.

Referring to Fig. 8, a column of "DESK" indicates a destination of an employee who uses this system. A mark in the column of "DESK" which is in a lightening state indicates that the employee is presence at a desk which is in the destination. The mark which is turned on and off indicates that the employee is moving to the destination. A column of "DESTINATION" indicates a destination for which the employee leaved. When the employee who arrives at the destination inputs an ID number, the state of the mark which is turned on and off in the column of "DESK" is changed to the lightening state. In a case where the destination is a conference room in which a radio ID card reader at an entrance, the ID number is read out from the radio ID card set in the radio ID card reader and automatically input without input operations of the ID number.

A time when the personal bulletin board 301 is accessed for the first time in a day is recorded, as a time at which the employee attends an office, in a column of "ATTENDING". Thus, when the employee attends the office, it is necessary for the employee to perform operations for accessing the personal bulletin board 301. A seat sensor may be provided in a seat of each of employees. In this case, based on a detecting signal from the seat sensor, a time at which the employee sits on the seat may be input to the system. The detecting signal from the seat sensor may be linked to the attending/leaving office management information.

A column of "TIME" indicates a period of time for which the employee stays in the destination. In a case where no moving information indicating that the employee has moved to another seat is input although the period of time elapses, a call is forwarded to a telephone identified by a forwarding telephone number provided that the employee stays the destination still. In a case where the period of time for which the employee stays in the destination elapses, a call may be forwarded to a predetermined telephone.

When the employee leaves the destination, the ID number of the employee is input to the system. When the ID number is input, the mark of the column of "DESK" is changed from the lightening state to the state where the mark is turned on and off. A telephone to which a call should be forwarded until the employee arrives at the next destination may be set.

A column of "URGENCY" indicates that a call to the employee is basically prevented from being received (or forwarded) and only an urgent call to the employee can be received.

Thus, the employee can be protected from unnecessary calls, so that the employee can efficiently work.

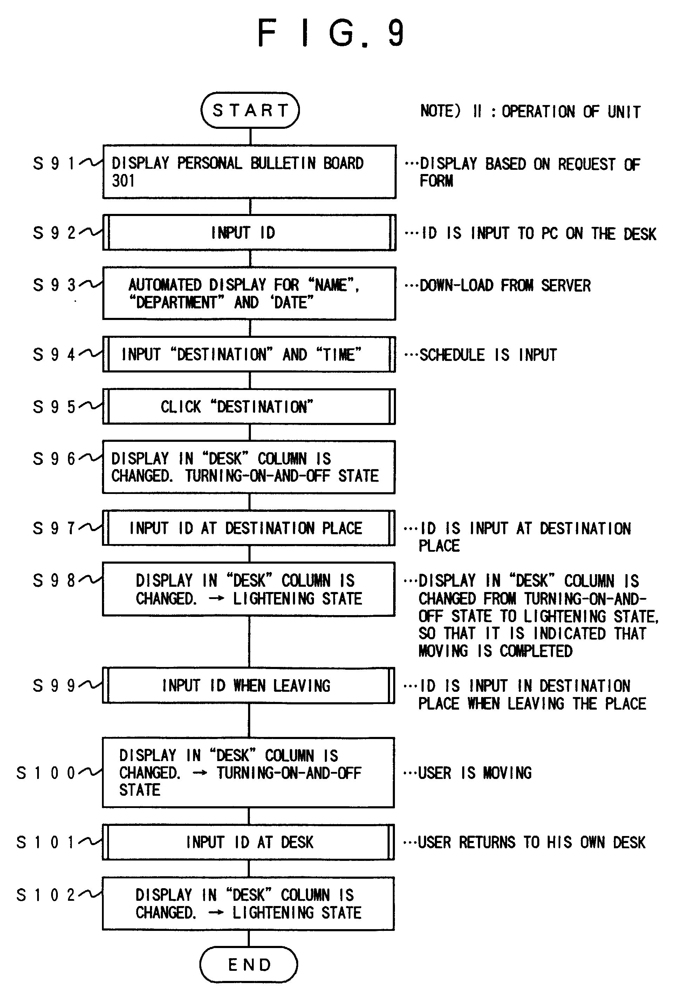

Fig. 9 shows an operation flow of the personal management system.

A name (a post, if necessary) corresponding to the ID number and a date are automatically displayed on the personal bulletin board 301 by the management unit 2.

At this time, a mark in the column "DESK" is turned on, so that it is indicated that the employee is present at his own desk.

Information regarding destination, a time at which the employee sits the seat and a time at which the employee leaves the desk and an expected time of a meeting is input in accordance with a schedule of the employee.

If the schedule has been input to the database already, it is not necessary to input the above information and the employee confirms the schedule.

When the employee leaves his own desk in accordance with the schedule, the employee performs a click operation at the column "DESK" in the personal bulletin board 301. This information is supplied to the management unit 2, so that the mark in the column "DESK" is changed from the lightening state to the state where the mark is turned on and off. The state where the mark is turned on and off means that the employee is moving .

When the employee arrives at another place (e.g., a first conference room), the employee inputs an ID number using the input unit, such as the personal computer, provided in the first conference room.

Information of the ID number is supplied to the management unit 2. A corresponding mark in the column "DESK" is then changed from the state where the corresponding mark is turned on and off to the lightening state in the personal bulletin board 301 for the employee identified by the ID number. Other employees, due to reading out the personal bulletin board 301 for the employee in the personal computers, can confirm that the employee is in the first conference room.

When the employee is absence at his own his desk, a call may be received by a telephone on the desk. In this case, the call is automatically forwarded to a telephone recorded as a telephone to which calls should be forwarded.

In a case where the mark in the column "DESK" is turned on and off, a call may be received by the telephone on the desk or a predetermined telephone located near the desk.

In a case where the column "URGENCY" in the personal bulletin board 301 is marked, the following message is automatically returned to a calling terminal in response to the call:

"THE PERSON IS ABSENCE AT HIS OWN DESK. IF URGENT, PLEASE OPERATE KEY "*", AND THIS CALL IS FORWARDED TO THE DESTINATION. IF YOU WISH TO LEAVE MEMORANDUM, PLEASE SPEAK WITHIN 30 SECONDS AFTER RINGING".

When the employee who returns to own his desk performs a click operation to specify the column "MEMO" on the screen of the personal computer, the employee can hear the contents of the memorandum by voice.

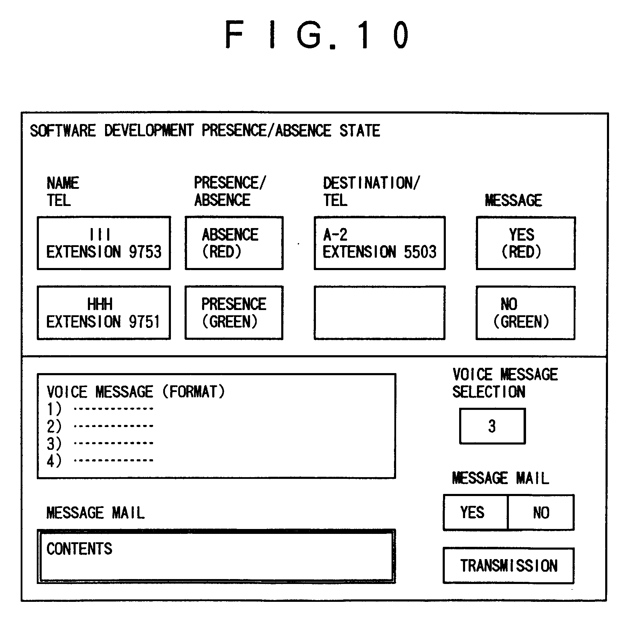

Fig. 10 shows an example of information regarding presence/absence in a section displayed on an operation screen of the output unit 3 (the input unit 1).

In a case where the information is displayed on the screen of the output unit 3 as shown in Fig. 10 and the output unit 3 is connected to the management unit 2 by the LAN,
(1) the operator (the employee) can know, based on the information displayed on the screen, whether staffs belonging to the section are present or absent in the section.
(2) "THERE IS A MESSAGE" is displayed on the right hand area of the screen if the operator is specified.
(3) The operator can provide a message by means of "STANDARD VOICE MESSAGE" or "MAIL".
(4) Items to which the operator should pay attention are displayed in a loud color, such as red.
(5) The voice message can be provided using standard voice response set in a switch.
(6) The message mail is the electronic mail.

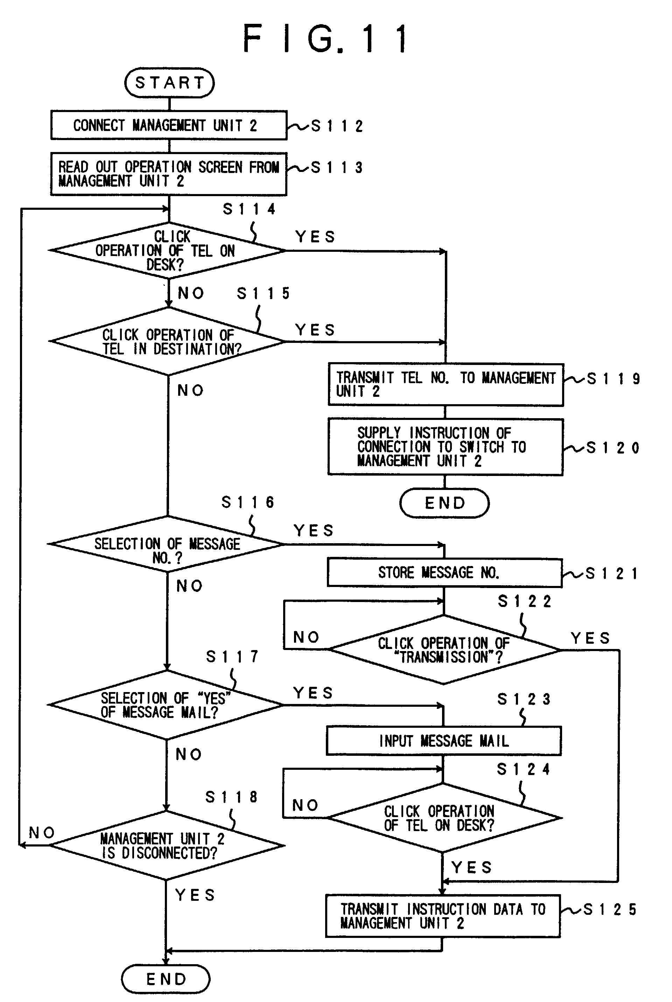

Fig. 11 shows a flowchart of a message operating control.

A third person who wishes to be provided with the telephone call service and the message service performs an operation to read out presence/absence information, as shown in Fig. 10, for an employee belonging to a section from the management unit 2. The employee is a person who should be called. Based on the presence/absence information, it is checked whether the employee who should be called is present or absent at his own desk. If the employee is present, the third person performs a click operation to specify a telephone number displayed on the screen of the personal computer. As a result, a dialing signal is supplied from the personal computer to the switch so that the third person talks with the employee by a telephone on the desk. If the employee is absent, the third person performs a click operation to specify a telephone number of the destination on the screen of the personal computer. As a result, a dialing signal is supplied from the personal computer to the switch so that the third person talks with the employee by a telephone of the destination. The third person may select the electronic mail, input necessary information and performs an click operation of "TRANSMISSION" shown in Fig. 10. As a result, a message is transmitted to the management unit 2.

When the employee who returns to his own desk performs a click operation to specify "OWN DESK" in the column "DESTINATION" of the personal bulletin board 301, or when the period of time for the meeting elapses, the mark in the column "DESK" is turned on and off. After this, calls are received by the telephone on his own desk or a predetermined telephone.

When the employee leaves the office, the employee performs a click operation of a column "LEAVING OFFICE" of the personal bulletin board 301. As a result, a time at which the click operation is performed is displayed in the column "LEAVING OFFICE".

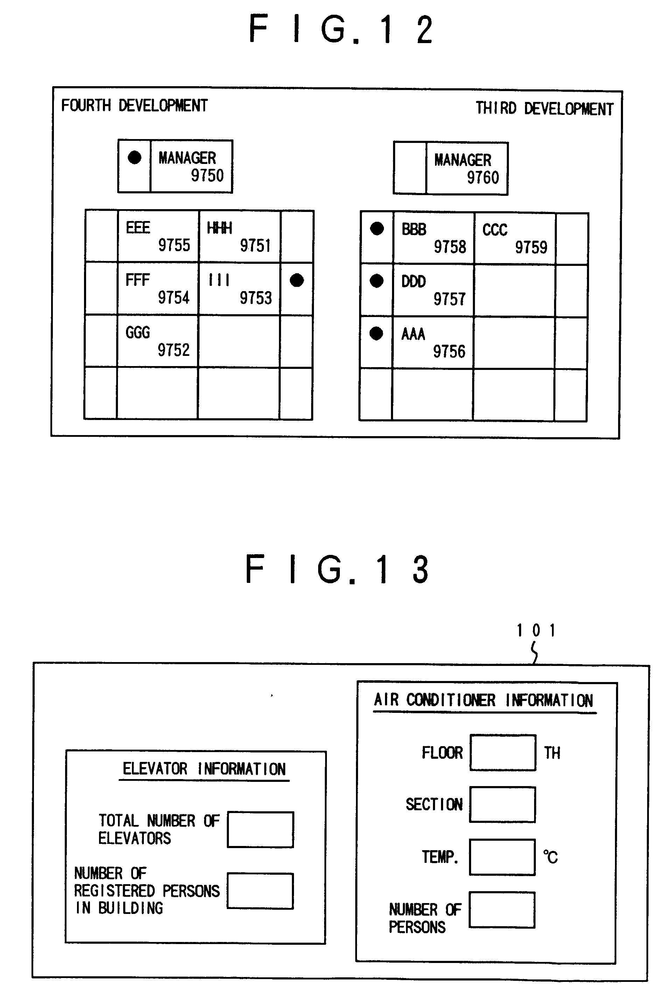

The presence/absence information may be displayed in a desk position format as shown in Fig. 12. In this case, it is easily determined whether a large number of staffs are present or absent in the section. In Fig. 12, a number in a block indicating a desk for each employee is a telephone number. A mark ● indicates that an employee is present at his own desk. In a case where a telephone conversation of an employee (e.g., AAA) or a telephone call from an outside line is forwarded to a telephone of a destination, the third person can know the state (the presence or absence) of the destination (e.g., EEE) based on the information displayed on the screen shown in Fig. 12. Due to a click operation to specify a block corresponding to a desk for an employee (e.g., EEE), personal information of the specified employee may be displayed as shown in Fig. 8 or Fig. 10. In this case, the third person can know where the employee leave for and where a call for the employee should be forwarded.

A description will now be given, with reference to Figs. 13 through 17, of a building management service.

Fig. 13 shows a system control information input screen 101 displayed on the building management input unit such as a personal computer which functions as the input unit 1.

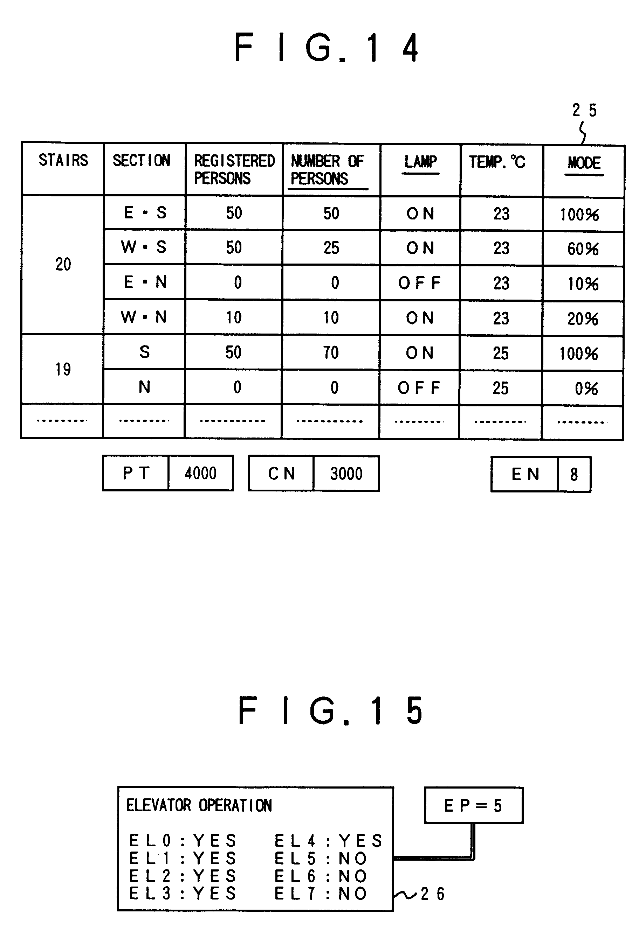

Figs. 14 and 15 show examples of system control information databases used for the building management. The system control information databases shown in Figs. 14 and 15 respectively corresponds to the databases 25 and 26 provided in the filing unit 21 shown in Fig. 3.

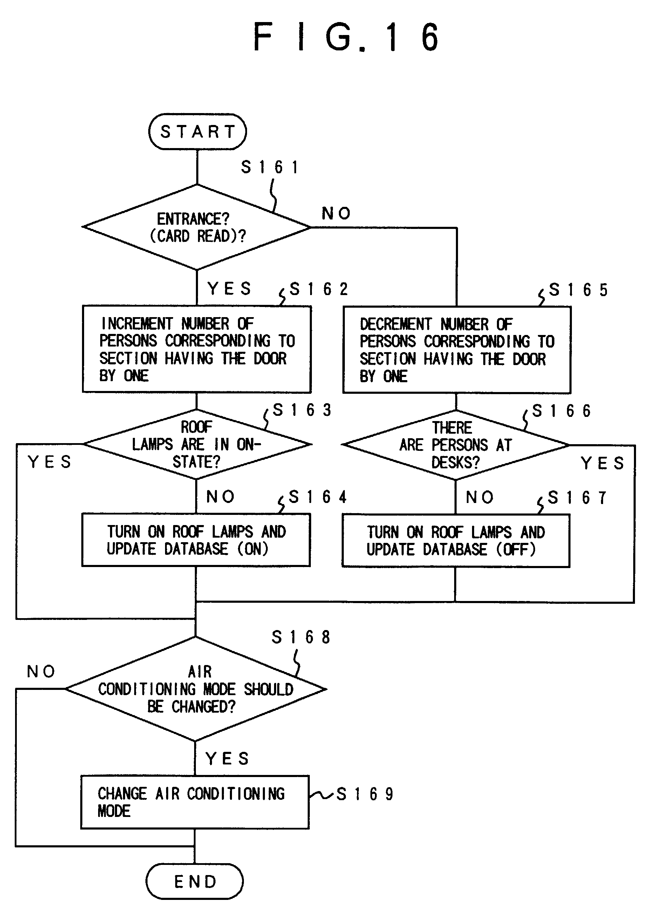

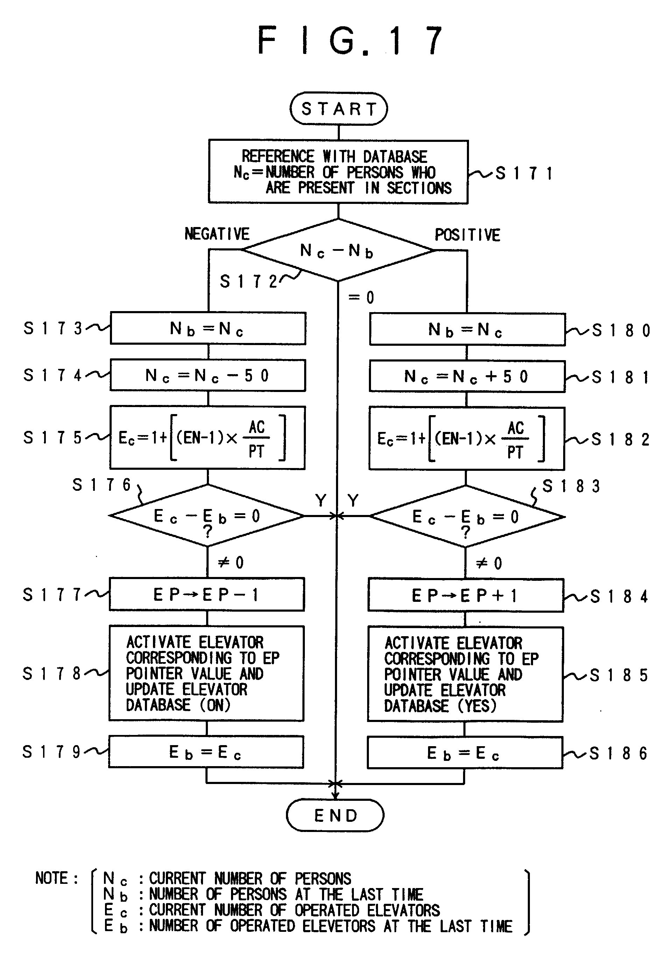

Figs. 16 and 17 are flowcharts illustrating the building management service.

In the example shown in Fig. 14, the database 25 includes system control information of the 20-th and 19-th floors. Referring to the database 25, the 20-th floor has the southeast, southwest, northeast and northwest rooms. For example, the southwest room has 50 persons (employees) on the register, and 25 persons out of the 50 registered persons are present in the southwest room now. Roof lamps are in an on-state (ON), a set room temperature is 23 °C and an air conditioning mode is set in a 60 % operation mode.

The 19-th room has the south and north rooms. The north room is empty. Roof lamps are in an off-state.

In Fig. 14, "PT:4000" means that the building has 4000 persons on the register in total, and "CN:3000" means that 3000 persons are presence in the building now in total. "EN:8" means that the building has 8 elevators in total.

The floor number information, xsection information, information of a number of registered persons, a set temperature and a number of elevators all of which should be stored in the database 25 are input from the building management input unit using the system control information input screen 101 as shown in Fig. 13.

The database 26 (see Fig. 15) stores information representing operating states of the elevators. Five elevators EL0 - EL4 out of the eight elevators EL0 - EL7 are operated (YES) and three elevators EL5 - EL 7 stop (NO). In Fig. 15, "EP" is a pointer indicating a number of elevators controlled so as to be operated.

The database 26 shown in Fig. 15 indicates that the elevators are controlled so that five are operated and three stop.

A description will now be given, with reference to Figs. 16 and 17, of operations in the building management service.

In the building, a door of each of the sections (rooms) is opened when a correct radio ID card is read by a radio ID card reader provided outside the room. In a case where a person goes out of a room, the door can be opened by hand.

Thus, based on determination whether the open and close of the door is based on the information read out from the ID card, it can be checked whether a person has entered or gone out of the room.

The building management system controls turning on and off of the roof lamps, the air conditioning mode (a full operation mode, a 50 % operation mode, a 20 % operation mode and the like) and a number of elevators to be operated in accordance with a number of persons who are present in the respective sections of the building.

First, when a door is opened, a door sensor which is one of the input devices of the input unit 1 outputs a door-open interruption signal. The management unit 2 determines whether the door-open interruption signal is based on opening the door when the ID card is read or opening the door by hand to go out from the room.

If it is determined that a person enters the room, a number of persons in a section of a floor in which the door corresponding to the door sensor generating the door-open interruption signal exits is incremented by one (+1). It is checked, with reference to the data base 25, whether the roof lamps are in the on-state. If the roof lamps are in the off-sate (OFF), the roof lamps are controlled so as to be turned on. A column "ROOF LAMP" corresponding to the section (the room) is changed from "OFF" to "ON".

If it is determined that a person goes out of the room, the number of persons in the section having the door is decremented by one (-1). If a number of persons who are in the section is equal to zero, the roof lamps are turned off. The column "ROOF LAMP" corresponding to the section is changed from "ON" to "OFF".

Next, it is checked whether the air conditioning mode should be changed. For example, if a ratio of a number of persons who are present in the section to the number of persons on the register in the section is equal to or greater than a constant value, the air conditioning mode is switched to the full operation mode. When a only one person is present in the section, the air conditioning mode is switched to the 10 % operation mode. In other cases, the air conditioning mode may be continuously changed in proportion to the number of persons who are present in the section or be changed by some stages.

In the processing unit 20, for example, a ten-minutes-timer is operated, so that an elevator power saving module is activated every 10 minutes. The elevator power saving module is operated in accordance with the following procedure.
(1) With reference to the database 25, numbers of persons who are present in the respective sections are added, so that the total number Nc of persons who are present in the building is obtained.
(2) The difference the total number Nc and the last total number Nb (the reference value) obtained before 10 minutes is calculated.
(3) If the difference calculated in step (2) is zero, no operation is performed.
(4) If the difference is positive, that is, the number of persons is creased, the calculated total number Nc is stored as the last total number Nb.
(5) If the difference is negative, that is, the number of persons is decreased, the calculated total number Nc is stored as the last total number Nb.

In the flowchart shown in Fig. 17, in order to prevent the number of elevators from being increased or decreased by increasing or decreasing the number of persons by one, the number of elevators is controlled under a hysteresis characteristic. To obtained the hysteresis characteristic, for example, 50 is subtracted from and added to the total number Nc of persons and at least one elevator is always operated. Thus, an ideal number of elevators corresponding to a ratio of a number CN of persons who are present to a number PT of persons who are on the register is decided so as to be equal to or less than a number (EN-1) obtained by subtracting one from the total number (EN) of elevators. Since the number of elevators is an integer, a Gaussian symbol operation is performed.

[1.3] is defined as a maximum integer which is less than 1.3. That is, [1.3] is equal to "1". The ideal number of elevators falls within a range between "1" (the minimum) and "EN" (the maximum).

The calculated ideal number Ec of elevators and the last calculated number Eb of elevators Eb are compared. If they are equal to each other, the process is terminated.

If they differ from each other, the pointer EP indicating a number of elevators is incremented or decremented by one (+1 or -1). An elevator corresponding to the incremented or decremented number of the pointer EP is switched from a idle state to an active state (or from the active state to the idle state). The information in a corresponding area (in this example, "EL5") of the database 25 is changed from "NO" to "YES" or from "YES" to "NO". The calculated ideal number Ec of the elevators is stored as the last calculated number Eb.

As has been described above, the system can be provided with a number of persons who are present in a section based on a number of persons who enter and go out of the section. Based on the number of persons who are present in the section, the air conditioner installed in the section can be operated under an optimum conditions without uselessness. The number of persons who are present in the building is checked at predetermined intervals, the elevators are operated in accordance with the number of persons. Thus, energy loss based on the operation of useless elevators can be reduced.

In the above example, the minimum number of elevators which should be operated is "1". However, the minimum number of elevators may also be "2". The elevators which are operated are changed every 10 minutes. However, the number of elevators which are operated may be dynamically controlled. For example, the number of elevators which are operated may be changed every one hour at midnight and at short intervals (e.g., one minute) immediately after an attending time and immediately before a leaving time.

The present invention is not limited to the aforementioned embodiments, and other variations and modifications may be made without departing from the scope of the claimed invention.

## Claims

1. A personal management system comprising:
an input unit, corresponding to an operator, for inputting place information regarding a place in which the operator is present;
management means for making a plurality of kinds of output information based on the place information input by said input unit and information which has been previously stored; and
an output unit for performing a predetermined operation in accordance with the kinds of output information made by said management means.

2. The personal management system as claimed in claim 1, wherein said management means has means for outputting a plurality of kinds of output information based on a single kind of information supplied from said input unit.

3. The personal management system as claimed in claim 1, wherein said plurality of kinds of output information include at least information regarding presence and absence at a desk.

4. The personal management system as claimed in claim 1, wherein said plurality of kinds of output information include at least information regarding a telephone forwarding service.

5. The personal management system as claimed in claim 1, wherein said plurality of kinds of output information include at least information regarding a message service.

6. The personal management system as claimed in claim 1, wherein said plurality of kinds of output information include at least information regarding attending and leaving an office.

7. The personal management system as claimed in claim 1, wherein said plurality of kinds of output information include at least information regarding a schedule management.

8. The personal management system as claimed in claim 1, wherein input unit includes means for automatically input information regarding the operator without input operations by the operator.

9. A recording medium which stores a program executed by a computer system, said program comprising:
means for processing place information regarding a place in which an operator is present, the place information being input by an input unit corresponding to the operator;
means for making a plurality of kinds of output information based on the place information and information which has been previously stored; and
means for causing an output unit to perform a predetermined operation in accordance with the kinds of output information.

10. A personal management system comprising:
an input unit, shared by operators, for input place information regarding a place in which the each of operators is present;
management means for making a plurality of kinds of output information based on the place information input by said input unit and information which has been previously stored; and
an output unit for performing a predetermined operation in accordance with the kinds of output information made by said management means.

11. The personal management system as claimed in claim 10, wherein said management means has means for outputting a plurality of kinds of output information based on a single kind of information supplied from said input unit.

12. The personal management system as claimed in claim 10, wherein said plurality of kinds of output information include at least information regarding presence and absence at a desk.

13. The personal management system as claimed in claim 10, wherein said plurality of kinds of output information include at least information regarding presence and absence in a meeting.

14. The personal management system as claimed in claim 10, wherein said plurality of kinds of output information include at least information regarding a telephone forwarding service.

15. The personal management system as claimed in claim 10, wherein said plurality of kinds of output information include at least information regarding a message service.

16. The personal management system as claimed in claim 10, wherein said plurality of kinds of output information include at least information regarding attending and leaving an office.

17. The personal management system as claimed in claim 10, wherein said plurality of kinds of output information include at least information regarding a schedule management.

18. The personal management system as claimed in claim 10, wherein said plurality of kinds of output information include at least information regarding a building management.

19. The personal management system as claimed in claim 18, wherein the information regarding the building management includes information regarding an operation management of elevators.

20. The personal management system as claimed in claim 18, wherein the information regarding the building management includes information regarding an air conditioner control.

21. The personal management system as claimed in claim 10, wherein input unit includes means for automatically input information regarding the operator without input operations by the operator.

22. A recording medium which stores a program executed by a computer system, said program comprising:
means for processing place information regarding a place in which each of operators is present, the place information being input by an input unit shared by the operators;
means for making a plurality of kinds of output information based on the place information and information which has been previously stored; and
means for causing an output unit to perform a predetermined operation in accordance with the kinds of output information.
